(19) Europäisches Patentamt

European Patent Office

Office européen des brevets

(11) Publication number: **0 339 784 B1**

(12) # EUROPEAN PATENT SPECIFICATION

(45) Date of publication of patent specification: **08.12.93** (51) Int. Cl.5: **A23P 1/16**, A23L 1/216

(21) Application number: **89302700.3**

(22) Date of filing: **20.03.89**

(54) **Food and method of its preparation.**

(30) Priority: **22.03.88 GB 8806774**

(43) Date of publication of application:
**02.11.89 Bulletin 89/44**

(45) Publication of the grant of the patent:
**08.12.93 Bulletin 93/49**

(84) Designated Contracting States:
**AT BE CH DE ES FR GB GR IT LI NL SE**

(56) References cited:
**US-A- 3 346 387
US-A- 3 698 914
US-A- 4 251 560**

(73) Proprietor: **UNILEVER PLC
Unilever House
Blackfriars
P.O. Box 68
London EC4P 4BO(GB)**
(84) Designated Contracting States:
**GB**

(73) Proprietor: **UNILEVER N.V.
Weena 455
NL-3013 AL Rotterdam(NL)**
(84) Designated Contracting States:
**BE CH DE ES FR GR IT LI NL SE AT**

(72) Inventor: **Bailey, John
3 Manor Farm Way
Sharnbrook Bedford MK44 1PH(GB)**
Inventor: **Hewitt, Kathleen Joan
18 West Avenue
Gorleston Norfolk NR31 6JF(GB)**
Inventor: **Stringer, John Vincent
11 Mannings Rise
Rushden Northants NN10 OLY(GB)**

(74) Representative: **Roscoe, Brian Corrie et al
UNILEVER PLC
Patents Division
Colworth House
Sharnbrook
Bedford MK44 1LO (GB)**

EP 0 339 784 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

**Description**

The invention relates to a food product and a method of its preparation. In particular the invention is related to food products, in particular potato products, which show an aerated, light structure after preparation for consumption.

A well-known method to prepare aerated souffle type food products involves the whipping of egg-whites and the combining of these egg-whites with a mixture of the remaining ingredients. This method has the disadvantage that it requires a two stream processing route, furthermore this method often does not allow for an intermediate storage period at frozen temperatures prior to consumption. Furthermore, this method is often not applicable to the processing of relatively heavy food materials, such as for instance potato or other starchy materials.

The invention provides a method for the preparation of aerated souffle type food products which does not require a two stream processing, which allows the intermediate storage of the product prior to preparation for consumption, and which allows the use of relatively heavy materials such as potato.

It has been found that souffle type products can be obtained by mixing the ingredients, and aerating the mixture prior to storage. It has also been found that gelatinised starch and film formers are important ingredients of a souffle composition according to the invention.

Therefore the invention relates to a method for preparing a food product comprising the preparation of a mixture of:

| ingredient | possible range wt%* | preferred range wt%* |
|---|---|---|
| gelatinised starch | 5 - 20 | 8 - 19 |
| film former | 0.1- 2.5 | 1.0- 1.4** |
| egg yolk solids | 0 - 5 | 2 - 4 |
| fat or oil | 0 - 20 | 5 - 15 |
| milk solids | 0 - 3 | 1 - 2 |
| seasoning | 0 - 5 | 0 - 0.5 |
| water | 40 - 94.1 | 60 - 90 |

* All these percentages are by weight of the total composition, percentages (except for water) are based on dry matter of the constituents.
** Preferred range is dependent on the type of film former used, for egg albumen 1.0 to 1.4% is preferred.

The gelatinised starch component can be any edible starch such as for instance wheat starch, rice starch, maize starch, potato starch. Preferred is the use of potato starch, most preferred is the use of mashed potato as the starch source. Preferably the starch is gelatinised and processed such that the starch granules are mainly intact, therewith avoiding sliminess of the product.

The film former can be any vegetable or animal film former commonly used in the processing of foods. Examples of suitable film formers are milk protein, whey protein, soy protein, sodium caseinate, gluten, chicken protein, blood protein, egg albumen and mono- and diglycerides, and cellulose derivatives. Most preferred is the use of egg albumen as a film former source.

The yolk solids are preferably added to obtain a rich taste of the product, most preferred is the use of eggs as ingredients of the product, these eggs function as a basis for the egg albumen film former and of the egg yolk solids. Separation of the egg yolks from the egg whites prior to the mixing of ingredients is not necessary.

Throughout this application the terms fat and oil are used interchangeably. Both terms encompass triglyceride compositions as well as edible substances that are physically similar to triglycerides, such as waxes, e.g. jojoba oil, and poly fatty acid esters of mono and di-saccharides, and which may be used as replacement for, or in admixture with triglycerides. Preferred is the use of butter or cheese as fat source. This enhances the creaminess of the product.

The milk solids are preferably added in the form of whole or semi-skimmed milk or milk powder. The seasoning ingredients preferably comprise the standard seasonings of mashed potato products, among these are salt, pepper, nutmeg and parsley.

2

The preferred starting mixture therefore comprises:

| ingredient | preferred range wt% |
|---|---|
| Mashed potato (80% water, 20% potato starch) | 45-68% |
| Egg white (90% water, 9% protein) | 10-20 |
| Egg yolk (51% water, 32% fat 16% protein) | 2-10 |
| Butter (82% butter fat, 18% water) | 10-20 |
| Milk (12% milk solids, 88% water) | 10-20 |
| Salt | 0.01-0.5 |
| Pepper | 0.0001-0.001 |
| Nutmeg | 0.001-0.05 |
| Parsley | 0.002-0.1 |
| Water | balance |

The composition is at first mixed by standard procedures, which will generally result in a small overrun of 2-20%. After the initial mixing the ingredients are thoroughly mixed to effect additional aeration which will preferably result in an additional overrun of 30-60%. Overrun is defined for a unit volume as

$$\frac{\text{weight of unaerated product} - \text{weight of aerated product}}{\text{weight of aerated product}} \times 100$$

The aeration can be carried out in the same equipment which was used to prepare the initial mixture. It is however preferred to carry out the first mixing under slow stirring followed by the transfer of the mixture to a fast mixer which operates at an overpressure of air, $CO_2$ or nitrogen of between 0.5 and 6 bar. to effect the additional aeration. The overrun after the mixing and aeration is preferably from 10-100%, most preferred from 20-60%.

After mixing the material is preferably filled into containers. These containers can be made of any desired packaging material, although it is preferred to use materials which are able to withstand the conditions of further handling up to consumption. Single portion packages, containing from 50-200g of material are preferred.

The material is then preferably pre-set to set the structure. This presetting can be effected by any treatment which fixes the structure. Possible treatments involve for instance oven-heating, fast freezing, grilling. Most preferred is the use of a microwave treatment to set the structure, this treatment effecting the fast and thorough heating of the entire product, without the formation of dry crust elements. The microwave treatment is preferably carried out for 20-200 seconds, more preferred from 50-120 seconds when using an output of 700 Watts. Other outputs may require shorter or longer microwave heating times. Generally large portions require relatively long presetting periods, small portions allow short presetting periods. Continuous microwave ovens can also be used to effect presetting.

3

After presetting, the products are stored. Depending on the storage time and the packaging conditions, this storage can be at ambient temperature, chilled conditions or at frozen temperatures. Most preferred is the storage of the pre-set product in a container which is contained in an outer wrapper or box at frozen conditions, preferably from -5 to -25°C.

After storage the products are prepared for consumption by a heat-treatment, which will effect the final raising of the product to result in a light, attractive final product. Any conventional heat-treatment can be used, although the use of a standard oven or a microwave oven is preferred. If the product is frozen during storage it is preferred to transfer the product immediately from the freezer into the heating device. Generally the heating time will be from 5-50 minutes, the oven temperature being from 150-200°C.

The invention will be illustrated by means of the following examples.

EXAMPLE 1

A composition is prepared by mixing the following ingredients in a Hobart mixer at setting 1 for 2 minutes, setting 2 for 2 minutes and another 2 minutes at setting 1.

| Mashed potato | 53.49% |
|---|---|
| Egg white | 13.83% |
| Egg yolk | 5.85% |
| Butter | 13.30% |
| Milk | 13.30% |
| Salt | 0.20% |
| Pepper | 0.0005% |
| Nutmeg | 0.01% |
| Parsley | 0.02% |

The mixture is transferred to a Mondomix (R) and whipped for another 1-1½ minutes at 300-800 RPM with a gas over-pressure of about 1.5 bar. The final product has an overrun of about 50%. The mixture is filled into moulds, each containing about 80g and subsequently pre-set in a microwave oven at 700 Watts output for 80s. The containers are wrapped in an airtight wrap and stored under frozen conditions (about -18°C). The product is prepared for consumption by oven heating at 180°C for 25 minutes. The final product has a light attractive texture.

EXAMPLE 2

Example 1 was repeated except that butter was replaced by cheese. The final product has a light attractive texture.

**Claims**

1.  Method for preparing a soufflé type food product by preparing an aqueous mixture comprising 5-20% (wt) of gelatinised starch and 0.1 to 2.5% (wt) of a film former and aerating the mixture to an overrun of more than 10%, followed by the presetting of the structure prior to storage; wherein overrun is defined for a unit volume as

$$\frac{\text{weight of unaerated product} - \text{weight of aerated product}}{\text{weight of aerated product}} \times 100$$

2.  Method according to claim 1, characterised in that the overrun is more than 30%.

3.  Method according to claim 1 or 2, characterised in that the gelatinised starch is potato starch.

**4.** Method according to any of claims 1 to 3, characterised in that the film former is egg albumen.

**5.** Method according to any of claims 1-4, characterised in that the presetting is done by microwave oven heating.

**6.** Method according to any of claims 1-5, characterised in that the product is stored under frozen conditions.

**7.** Method according to any of claims 1-6, characterised by the oven or microwave oven heating of the product prior to consumption.

**8.** Soufflé type food product containing a pre-set aqueous mixture comprising 5-20% (wt) of gelatinised starch and 0.1 to 2.5% (wt) of a film former, having an overrun of more than 10% wherein overrun is defined for a unit volume as

$$\frac{\text{weight of unaerated product } - \text{weight of aerated product}}{\text{weight of aerated product}} \quad \text{x} \quad 100$$

**9.** Food product according to claim 8, characterised in that the overrun is more than 30%.

**10.** Food product according to claim 8 or 9, characterised in that the gelatinised starch is potato starch.

**11.** Food product according to any of claims 8 to 10, characterised in that the film former is egg albumen.

**12.** Food product according to any of claims 8 to 11 being frozen.

**Patentansprüche**

**1.** Verfahren zur Herstellung eines Soufflé-artigen Nahrungsmittelprodukts durch Herstellen einer wässerigen Mischung umfassend 5 bis 20 Gew.% gelatinisierte Stärke und 0,1 bis 2,5 Gew.% eines Filmbildners sowie Aufschäumen der Mischung für einen Lufteinschlag von mehr als 10 %, gefolgt vom Vorstabilisieren der Struktur vor der Lagerung; wobei der Lufteinschlag für ein Einheitsvolumen definiert ist als

$$\frac{\text{Gewicht nicht aufgeschäumtes Produkt } - \text{Gewicht aufgeschäumtes Produkt}}{\text{Gewicht aufgeschäumtes Produkt}} \quad \text{x} \quad 100.$$

**2.** Verfahren nach Anspruch 1, dadurch gekennzeichnet, daß der Lufteinschlag mehr als 30 % beträgt.

**3.** Verfahren nach Anspruch 1 oder 2, dadurch gekennzeichnet, daß die gelatinisierte Stärke Kartoffelstärke ist.

**4.** Verfahren nach einem der Ansprüche 1 bis 3, dadurch gekennzeichnet, daß der Filmbildner Ovalbumin ist.

**5.** Verfahren nach einem der Ansprüche 1 bis 4, dadurch gekennzeichnet, daß das Vorstabilisieren durch Erhitzen in einem Mikrowellenherd durchgeführt wird.

**6.** Verfahren nach einem der Ansprüche 1 bis 5, dadurch gekennzeichnet, daß das Produkt unter gefrorenen Bedingungen gelagert wird.

7. Verfahren nach einem der Ansprüche 1 bis 6, gekennzeichnet durch das Erhitzen des Produkts in einem Herd oder Mikrowellenherd vor dem Verzehr.

8. Soufflé-artiges Nahrungsmittelprodukt, enthaltend eine vorstabilisierte wässerige Mischung umfassend 5 bis 20 Gew.% gelatinisierte Stärke und 0,1 bis 2,5 Gew.% eines Filmbildners, mit einem Lufteinschlag von mehr als 10 %, wobei der Lufteinschlag für ein Einheitsvolumen definiert ist als

$$\frac{\text{Gewicht nicht aufgeschäumtes Produkt} - \text{Gewicht aufgeschäumtes Produkt}}{\text{Gewicht aufgeschäumtes Produkt}} \times 100.$$

9. Nahrungsmittelprodukt nach Anspruch 8, dadurch gekennzeichnet, daß der Lufteinschlag mehr als 30 % beträgt.

10. Nahrungsmittelprodukt nach Anspruch 8 oder 9, dadurch gekennzeichnet, daß die gelatinisierte Stärke Kartoffelstärke ist.

11. Nahrungsmittelprodukt nach einem der Ansprüche 8 bis 10, dadurch gekennzeichnet, daß der Filmbildner Ovalbumin ist.

12. Nahrungsmittelprodukt nach einem der Ansprüche 8 bis 11, das gefroren ist.

**Revendications**

1. Procédé de préparation d'un produit alimentaire du type soufflé consistant à préparer un mélange aqueux comprenant 5 à 20% en poids d'amidon gélatinisé et 0,1 à 2,5% en poids d'un filmogène et à aérer le mélange jusqu'à un bombement de plus de 10%, puis à prédurcir la structure avant stockage, le bombement étant défini pour un volume unitaire par :

$$\frac{\text{poids du produit non aéré} - \text{poids du produit aéré}}{\text{poids du produit aéré}} \times 100.$$

2. Procédé selon la revendication 1, caractérisé en ce que le bombement est de plus de 30%.

3. Procédé selon la revendication 1 ou 2, caractérisé en ce que l'amidon gélatinisé est l'amidon de pommes de terre.

4. Procédé selon les revendications 1 à 3, caractérisé en ce que le filmogène est le blanc d'oeuf.

5. Procédé selon l'une quelconque des revendications 1 à 4, caractérisé en ce qu'on effectue le prédurcissement par chauffage dans un four à micro-ondes.

6. Procédé selon l'une quelconque des revendications 1 à 5, caractérisé en ce que le produit est stocké dans des conditions de congélation.

7. Procédé selon l'une quelconque des revendications 1 à 6, caractérisé en ce qu'on effectue le chauffage du produit avant consommation dans un four ou un four à micro-ondes.

8. Produit alimentaire du type soufflé contenant on mélange aqueux pré-durci comprenant de 5 à 20% en poids d'amidon gélatinisé et de 0,1 à 2,5% en poids d'un filmogène, le bombement étant supérieur à 10%, le bombement étant défini pour un volume unitaire par :

$$\frac{\text{poids du produit non aéré} - \text{poids du produit aéré}}{\text{poids du produit aéré}} \times 100.$$

9. Produit alimentaire selon la revendication 8, caractérisé en ce que le bombement est de plus de 30%.

10. Produit alimentaire selon la revendication 8 ou 9, caractérisé en ce que l'amidon gélatinisé est l'amidon de pommes de terre.

11. Produit alimentaire selon l'une quelconque des revendications 8 à 10, caractérisé en ce que le filmogène est le blanc d'oeuf.

12. Produit alimentaire selon l'une quelconque des revendications 8 à 11, qui est dans un état congelé.